# EUROPÄISCHE PATENTSCHRIFT

(11) **EP 1 060 136 B1**
(45) Veröffentlichungstag und Bekanntmachung des Hinweises auf die Patenterteilung: **26.11.2003**
(21) Anmeldenummer: 99965466.8
(22) Anmeldetag: 15.12.1999
(51) Int. Cl.: C02F 11/12, C02F 11/14

(54) **VERFAHREN ZUR ENTWÄSSERUNG VON KLÄRSCHLÄMMEN MIT PLATTENFILTERN (FILTERPRESSEN)**
METHOD OF DEWATERING SLURRIES USING LEAF FILTERS (FILTER PRESSES)
PROCEDE D'ASSAINISSEMENT DE BOUES RESIDUAIRES AVEC DES FILTRES A PLAQUES (FILTRES-PRESSES)

(30) Priorität: 06.01.1999 DE 19900187
(43) Veröffentlichungstag der Anmeldung: 20.12.2000
(73) Patentinhaber: Stockhausen GmbH & Co. KG, 47805 Krefeld (DE)
(72) Erfinder: BARTSCHERER, Josef, D-47906 Kempen (DE); HARTAN, Hans, Georg, D-47625 Kevelar (DE); HELD, Winfried, D-56472 Lautzenbrücken/Westerwald (DE); LOBANOV, Fedor Ivanovitch, Moskau, 117311 (RU); CHRAMENKOV, Stanislav Vladimirovitch, Moskau, 117420 (RU); SAGORSKIJ, Vladimir Alexandrovich, Moskau, 103030 (RU)
(74) Vertreter: Klöpsch, Gerald, Dr.-Ing.
(86) Internationale Anmeldenummer: EP9909941
(87) Internationale Veröffentlichungsnummer: WO00040515

(56) Entgegenhaltungen:
- EP-A- 0 264 900
- US-A- 4 411 797
- US-A- 5 160 440
- PATENT ABSTRACTS OF JAPAN vol. 007, no. 252 (C-194), 9. November 1983 (1983-11-09) & JP 58 139798 A (EBARA INFILCO KK), 19. August 1983 (1983-08-19)

## Beschreibung

Die Erfindung betrifft ein Verfahren zur Entwässerung von Schlämmen, vorzugsweise von kommunalen Klärschlämmen bei der Abwasseraufbereitung mit Druckfilterpressen, insbesondere mit Kammerfilterpressen und Membranfilterpressen unter Verwendung von wasserlöslichen Polyelektrolyten als Flockungshilfsmittel bei der Schlammkonditionierung.

Neben der landwirtschaftlichen Verwertung erfolgt die notwendige Entsorgung von Klärschlämmen durch thermische Behandlung des Klärschlammes unter Verbrennung oder Ent- und Vergasung und in überwiegendem Maße durch Deponierung.

Klärschlämme stellen Zusammensetzungen mit sehr hohen Wassergehalten dar, so daß sowohl bei der Deponierung als auch für thermische Verfahren der Feststoffgehalt des Schlammes durch mindestens eine mechanische Entwässerungsstufe, vorzugsweise mit Siebbandpressen, Zentrifugen oder durch Druckfiltration erhöht wird. Besonders zur Verbesserung der Entwässerung auf Filterpressen ist es erforderlich den durch Eindickung vorkonzentrierten Schlamm durch eine weitere Behandlung zu konditionieren. Hierzu wird der Klärschlamm mit organischen, polymeren Flockungshilfsmitteln, vorzugsweise mit hochmolekularen kationischen Polyelektrolyten geflockt und anschließend in diskontinuierlicher Arbeitsweise mit Kammerfilterpressen oder Membranfilterpressen entwässert.

Nach EP-B-19176 kann die Entwässerung in zwei Stufen vorgenommen werden. Der geflockte Schlamm wird zunächst in einer Siebtrommel oder auf einzelnen Siebbändem entwässert und in einem Zwischenbehälter gesammelt, bevor er über eine Kolbenmembran- oder Exzenterschneckenpumpe der Kammerfilterpressen zugeführt und der Filtration unter einem Druck von bis zu 15 bar unterworfen wird. Durch die Vorentwässerung zeichnet sich das Verfahren durch kürzere Chargenzeiten in der Kammerfilterpresse aus. Dieser Vorteil wird jedoch durch die Maßnahmen und die Zeit für die erste Verfahrensstufe aufgehoben.

In gfw-wasser/abwasser 126 (1985), S. 124 - 130 wird von V. Zees, T. Clausdorf und G. Gerardts ergänzend festgestellt, daß nach der Schlammkonditionierung und dem Abtrennen des Überstandswassers die Entwässerung des geflockten Schlammes in der Kammerfilterpresse nur begrenzt erfolgen kann, da hierfür keine ausreichende Flockenstabilität erreicht wird.

Nach K. J. Thomé-Kozmiensky, Klärschlammentwässerung, TK-Verlag K. J. Thomé-K., Neuruppin, 1998, S. 266, bietet die Polymerkonditionierung von Klärschlamm zur Entwässerung auf Filterpressen nur dann Vorteile, wenn keine hohen Anforderungen an die Scherfestigkeiten gestellt werden.

Nach EP-A-151 747 ist deshalb ein Entwässerungsverfahren bekannt, bei dem der geförderten Schlammmenge in Abhängigkeit von der Schlammdichte das Flockungsmittel dosiert zugesetzt und der so vorbehandelte Schlamm direkt der Kammerfilterpresse zugeführt wird.
Bei Presszeiten von 3 Stunden wird im Pressenaustrag entwässerter Klärschlamm mit Trokkensubstanzgehalten von 30 - 40 Gew.% erreicht.

Diese Arbeitsweise schließt weiterhin den nachteiligen Vorgang ein, daß während der Druckfiltration nicht überwiegend das von den Schlammflocken schwer entfernbare Wasser abgetrennt wird, sondern auch die durch Flockenbildung von Trübstoffen bereits freien Wasseranteile der geflockten Schlammmischung der Filtration durch die sich aufbauende und unter Druckeinwirkung verdichtende Filterwirkungsschicht unterworfen werden. Dieses für Klärschlämme verbreitet angewendete Entwässerungsverfahren auf Kammerfilterpressen ist daher mit erheblichen technischen und ökonomischen Nachteilen behaftet.

In DE-OS-38 20 110 wird ein Verfahren beschrieben bei dem die Konditionierung des Klärschlamms mit mindestens zwei organischen polymeren Flockungshilfsmitteln mit niedrigem und hohem Molekulargewicht durchgeführt wird, wobei der geflockte Schlamm wiederum vor der Kammerfilterpresse teilentwässert werden kann.
Nach WO 88/03048 erfolgt die Vorentwässerung auf etagenförmig angeordneten Siebbändern von denen der Schlamm pumpenfrei in einen Schlammsilo befördert wird.

Nach US 4,861,492 ist weiterhin ein Verfahren bekannt, bei dem der Klärschlamm durch polymere Flockungshilfsmittel geflockt, sedimentiert und danach in einer mindestens 2 Minuten dauernden Ruhephase ohne mechanische Belastungen gehalten wird. Danach wird das überstehende Abwasser dekantiert und der eingedickte Schlamm unter weiterem Zusatz von Flokkungshilfsmittel in der Druckfilterpresse entwässert. Das Verfahren erfordert für die Dekantation einen zusätzlichen apperativen Aufwand sowie Zeit und Hilfsmittel zur Stabilisierung des Flockungszustandes.

Bei einem weiteren Verfahren erfolgt nach Chem. Ing. Techn. 66, Nr. 9 (1994), Seite 1222, 1223, in einem druckfesten Flockungsreaktor eine Druckflockung des zuvor mit Flotationskohle und Asche angereicherten Klärschlammes, wobei der geflockte Schlamm ohne weitere mechanische Beanspruchung in die Filterpresse gelangen soll und minimale Filterwiderstände über den gesamten Befüllzyklus gewährleistet sein sollen.

J. T. Shah berichtet in der 44^{th} Purdue Industrial Waste Conference Proceedings, 1990, Lewis Publishers, Inc., Chelsea Michigan 48118, 1989 (1990), S. 513 - 518 über die Möglichkeiten zur Optimierung des Entwässerungsverfahrens auf Kammerfilterpressen durch stufenweise Drucksteigerung während des Entwässerungsvorgangs, wobei der Feststoffgehalt des Filterkuchens erhöht werden kann.

In der DE 93 07 712 U1 wird eine spezielle Bauart einer Schlammentwässerungspresse beschrieben, bei der die zum Nachpressen verwendete Druckluft anschließend zum Ausblasen des entwässerten Schlammes ausgenutzt wird. Mit dieser Schlammentwässerungspresse soll der hohe Druckluftverbrauch verringert werden.

In der DE 93 20 903 U1 wird eine Filtereinrichtung für Flüssigkeiten, insbesondere Schwimmbadwasser beschrieben, bei der die zu filtrierende Flüssigkeit aus einem Behälter über Filterelemente mit angeschwemmter Filterschicht abgesaugt wird. Durch die Bauweise dieser Filtereinrichtung soll der Reinigungsbetrieb, also die Entfernung und Entsorgung des verbrauchten Filterhilfsmittels verbessert und die hierzu notwendige Wassermenge verringert werden.

In der DE 36 17 519 A1 wird ein Verfahren sowie eine Vorrichtung zum Entfernen restlicher Verunreinigungen aus einer vorgeklärten Getränkeflüssigkeit beschrieben, wobei eine Filterpresse mit angeschwemmten Schichten von Filterhilfsmitteln verwendet wird. Als erfindungswesentlich wird hierbei der Aufbau der regenerierbaren Schicht des Filterhilfsmittels angesehen, wobei die Anschwemmung der Filterhilfsmittelschicht bei einer bestimmten Strömungsgeschwindigkeit vorgenommen wird. Die Filtration in der Filterpresse erfolgt in üblicher Weise unter Druck.

In der DE 41 19 167 A1 wird ein Verfahren zur Ermittlung der für die Auslegung und Dimensionierung von Filterpressen wesentlichen Kennwerte und Parameter sowie eine Vorrichtung zur Durchführung dieses Verfahrens beschrieben. Es handelt sich hier um ein Meßverfahren, bei dem in der Filterkammer ein dem bisherigen Filtrationsdruck entsprechender hydrostatischer Druck ausgeübt wird, der zur Erfassung des das Ende des Filtrationsvorgangs kennzeichnenden Druckabfalls fortlaufend überwacht wird.

In der US-PS 5,275,740 wird ein Verfahren und eine Vorrichtung zur Kontrolle des Schlammdrucks in einer Filterpresse, und zwar insbesondere zur Kontrolle des Enddrucks der schrittweise automatisch erfolgenden Filtrationszyklen zwecks gleichzeitiger Optimierung des Füllvorgangs der Presse und zur Aufrechterhaltung eines konstanten Pumpendrucks, beschrieben. Auch hier erfolgt die Filtration in der Presse unter Druck auf die im Stand der Technik bisher bekannte Weise.

In der JP 07124600 A wird ein Verfahren und eine Vorrichtung zur Behandlung von organischen Schlämmen beschrieben, wobei der organische Schlamm zunächst mit einem organischen polymeren Flockungsmittel geflockt und danach auf einer Filterpresse mittels Schwerkraftfiltration, d. h. nur unter hydrostatischem Druck des der Filterpresse zugeführten Schlamms entwässert wird.

Kommunale Schlämme weisen in Abhängigkeit von der Menge und Art ihrer organischen und mineralischen Bestandteile unterschiedliche, und zum Teil häufig schwankende Eigenschaften auf, die sich im Entwässerungsverhalten, insbesondere auch bei der Flockung der dispergierten Feststoffe mit organigschen Flockungshilfsmitteln sowie bei der Filtration auswirken. Insbesondere zur Entwässerung kommunaler Schlämme auf Kammerfilterpressen ist es daher erforderlich, die einzelnen Vorgänge des Verfahrens zu optimieren und auf einander abzustimmen. Neben der Auswahl geeigneter Flockungshilfsmittel und Apparaturen wird daher das Entwässerungsverfahren durch rechnergesteuerte Systeme gelenkt, bei denen das Flokkungshilfsmittel druck- oder saugseitig zur Klärschlammpumpe zudosiert und die Flockenbildung mit einer Floc-Sonde unter Regelung der Mischenergie optimiert wird. Ebenso wird die Schlammförderung zur Beschickung der Kammerfilterpresse während der Füllphase und der länger andauernden Druckfiltration elektronisch so gesteuert, daß bei derzeit üblichen Anfangsbeschickungsleistungen von 0,15 - 0,30 m³ Schlamm pro m² Filterfläche und Stunde ein zu schnell ansteigender Druck durch Regulierung vermieden wird, da sie zu einer starken, irreversiblen Verdichtung des sich aufbauenden Filterkuchens und damit zu einer Beeinträchtigung des Entwässerungsvorganges führen. Die Schlammentwässerungsleistung dieser Verfahren liegen derzeit bei maximal 6 m³ Schlamm pro m³ Filtervolumen und Stunde bzw. bei maximal 0,09 m³ Schlamm pro m² Filterfläche und Stunde.

Die bekannten Entwässerungsverfahren sind demnach dadurch gekennzeichnet, daß bereits die Schlammförderung der Pumpen in der 1. Phase der Filtration dabei im System einen Staudruck erzeugt, der durch die aus diesem Vorgang gleichzeitig resultierende Verdichtung des sich bildenden Filterkuchens infolge Erhöhung des Filtrationswiderstandes gesteigert wird.

Die bekannten Entwässerungsverfahren auf Kammerfilterpressen stellen demnach kompliziert zusammengesetzte Verfahrensvorgänge oder ebenso aufwendige, da separat und mehrstufig durchzuführende Verfahren dar.

Aufgabe der vorliegenden Erfindung war es daher, ein einfaches Verfahren zur Entwässerung von Klärschlamm oder anderen Schlämmen zu finden, das den Anforderungen nach verbesserten technischen Bedingungen und einer Reduzierung der Kosten entspricht. Insbesondere bestand die Aufgabe darin, ein Verfahren zur Abtrennung des nach der Polymerkonditionierung im Klärschlamm enthaltenen, von dispergierten Feststoffen freien Wassers zu finden, ohne die Scherstabilität des geflockten Klärschlammes zu beeinträchtigen und ohne die übrigen Nachteile, die bei der Durchführung separater Verfahrensstufen eintreten. Die Aufgabenstellung wird ergänzt durch den zusätzlichen Aspekt, gegebenenfalls auch die Plattenfilter in der Weise zu verbessern, daß sie zur Durchführung eines verbesserten Entwässerungsverfahren, vorzugsweise zur Verbesserung des Füllvorganges des Plattenfilters geeignet sind.

Entsprechend dem ATV-Handbuch Klärschlamm, Ernst & Sohn Verlag Berlin, 4. Auflage 1996, S. 357 u. 358 sind die verwendeten Kammerfilterpressen derzeit so konstruiert, daß das feststoffreie Filtrat über Filtratabzugskanäle bzw. Sammelkanäle im Plattenpaket unten und gegen Ende der Filtration zusätzlich oben abgeleitet wird. Bei hohen spezifischen Durchsatzleistungen stellen nach Abwassertechnik. Heft 2, 1991, Seiten 44-48, die als Widerstände charakterisierten hydraulischen Verhältnisse in den Filtratablaufkanälen eine Begrenzung, d. h. einen Engpaß dar.

Weiterhin sind nach dem bezeichneten ATV-Handbuch Kammerfilterpressen mit offenen Filtratabläufen bekannt, bei denen das Filtrat durch seitliche Abläufe, in der Regel einseitig, aus den einzelnen Platten abfließt. Derartige Kammerfilterpressen werden bei der Klärschlammenwässerung insbesondere wegen der Geruchsbelästigung durch Faulgase oder Ammoniak bei der gegebenenfalls erforderlichen Kalkkonditionierung nicht eingesetzt.

Es wurde nun gefunden, daß die Entwässerung von Klärschlamm in beträchtlichem Maße nach dem in Anspruch 1 bezeichnetenVerfahren verbessert werden kann. Hierbei wird der Klärschlamm unter Verwendung mindestens eines organischen Flockungshilfsmittels sowie gegebenenfalls weiterer Hilfsmittel konditioniert und der behandelte und geflockte Klärschlamm in den Plattenfilter eingebracht, der folgend auch als Filterpresse bezeichnet wird und der eine Kammerfilterpresse oder eine Membranfilterpresse oder eine Rahmenfilterpresse ist. Dort erfolgt eine hydrostatische Filtration unter Abtrennung der Hauptmenge des Wassers des behandelten, geflockten Klärschlamms und nachfolgend wird der teilentwässerte Klärschlamm der Druckfiltration unterworfen. Mindestens werden 50 Gew.-%, bevorzugt mindestens 60 Gew.-% und besonders bevorzugt mindestens 70 Gew.-% des Wassers im ersten Schritt der hydrostatischen Filtration entfernt.

Die Erfindung beruht auf der Erkenntnis, daß bei einer hydrostatischen Filtration des geflockten Klärschlammes, die weitgehend von undispergierten Feststoffanteilen freien Wasseranteile der geflockten Klärschlammischungen im Plattenfilter leicht abgetrennt werden können, wenn die geflockten Feststoffanteile zusammen mit den Wasseranteilen in die Kammerfilterpresse eingebracht und dort der bezeichneten einfachen Filtration ohne eine apparativ bedingte Druckbelastung unterworfen werden.

Weiterhin wurde erfindungsgemäß festgestellt, daß die Menge des in die Filterpresse geförderten, geflocktenen Schlammes in der Anfangsphase des Filtrationsvorganges, d.h. während der hydrostatischen Filtration gegenüber dem herkömmlichen Füllvorgang der Filterpresse wesentlich erhöht werden kann.

Zur Durchführung des erfindungsgemäßen Verfahrens werden Filterpressen verwendet, die mit Filtratablaufkanälen versehen sind, die einen Filtratabfluß mit einer Strömungsgeschwindigkeit von maximal 1,0 m/sec. gestatten. Insbesondere werden also Plattenfilter (Filterpressen) eingesetzt, bei denen das Filtrat durch Filtratabläufe mit großen Querschnittsflächen abgeleitet werden kann oder Plattenfilter, die offene Filtratabläufe bzw. offene Filtratablaufsysteme aufweisen, die aus Einzelabläufen und/oder Sammelabläufen und gegebenenfalls weiteren Ablaufelementen bestehen, so daß das Filtrat jeweils mit einer Strömungsgeschwindigkeit von maximal 1,0 m/sec abfließen kann. Solche Plattenfilter sind bekannt, sie werden jedoch bisher für andere Zwecke verwendet.

Weiterhin können Plattenfilter mit geschlossenen Filtratabläufen so modifiziert werden, daß sie ausschließlich oder teilweise oder zusätzlich offene Filtratabläufe aufweisen, so daß der angegebene Wert der Strömungsgeschwindigkeit des Filtrats nicht überschritten wird.
Eine weitere Verbesserung des erfindungsgemäßen Verfahrens wird beispielsweise auch dadurch erreicht, daß die aus den Eckbohrungen der Platten im Plattenpaket gebildeten Filtratsammelkanäle gegebenenfalls im Querschnitt erweitert, und/oder zusätzliche Öffnungen, vorzugsweise im unteren seitlichen Bereich der Filterplatten nahe bei den vorhandenen Filtratabläufen bei mindestens einem Teil der Filterplatten geschaffen werden. Der Filtratabfluß kann gegebenenfalls durch an diesen Abflußöffnungen angeordnete offene Rohrleitungen oder Rinnen geleitet werden. Erfindungsgemäß werden für das Verfahren auch Plattenfilter nach DE 197 07 167 A1 eingesetzt.

Bei der diskontinuierlichen Entwässerung des Klärschlamms auf Filterpressen sollen insgesamt kurze Filtrationszeiten und hohe Durchsatzmengen an Klärschlamm sowie feststoffreie Filtrate erreicht werden. Nach dem erfindungsgemäßen Verfahren erfolgt in der Füllphase die Förderung des geflockten Klärschlammes mit einer Anfangsbeschickungsleistung von mindestens 0,3 m³ Schlamm pro m² Filterfläche und Stunde, vorzugsweise im Bereich von 0,35-0,70 und besonderes bevorzugt im Bereich von 0,40 - 0,60 m³ Schlamm pro m² Filterfläche und Stunde. Der angegebene Leistungsbereich ergibt sich dabei zwangsläufig aus dem Flokkungsverhalten und den Filtrationseigenschaften des Klärschlammes und den sich daraus ableitenden, verfahrensmäßigen apparativen Gegebenheiten.

Das Verfahren bietet weiterhin den Vorteil, die Klärschlammflocken mit dem Wasser auf schonende Weise in die Filterpresse zu transportieren. Gegen Ende der Füllphase verdichtet sich durch die hydrostatische Filtration in den gefüllten Kammern der geflockte Klärschlammanteil, wobei ein Druckanstieg im gesamten System der Filterpresse erzeugt wird. Die Beschickungsleistung wird in der nun folgenden Phase der Druckfiltration auf Werte im Bereich von weniger als 0,3 m³ pro Schlamm pro m² Filterfläche und Stunde bis zu einem gewählten unteren Wert, dem sogenannten Abschaltwert, gesenkt, wobei im Plattenfilter maximale Druckwerte im Bereich von 10 - 20 bar, vorzugsweise 10 - 15 bar eingestellt werden.

Das erfindungsgemäße Entwässerungsverfahren ist für kommunale und/oder industrielle Schlämme mit Feststoffgehalten im Bereich von 0,5 - 15 Gew.% geeignet. Als kommunale Schlämme kommen Primär-, Überschuß- und Belebtschlämme sowie mineralisierte und vorzugsweise Faulschlämme sowie deren Mischungen zum Einsatz. Die in der Regel im Eindikker vorkonzentrierten Schlämme werden durch Behandlung mit organischen polymeren Flokkungshilfsmitteln sowie gegebenenfalls unter Zusatz anorganischer und/oder organischer gerüstbildender Zuschlagstoffe, wie Kalk, Eisensalze, Aschen, Filterstäube, Feinstkohle und feinteilige Pflanzenteile, wie Sägemehl oder gehäckseltes Stroh oder deren Mischungen, konditioniert. Als organische Flockungshilfsmittel werden wasserlösliche und/oder überwiegend wasserlösliche, teilvemetzte Polymerisate, Co- und Terpolymerisate aus wasserlöslichen nichtionogenen und/oder ionischen Monomeren und Comonomeren pulverförmig, als wässrige Lösung oder als Wasser-in-Wasser-Dispersion oder Wasser-in-Öl-Dispersion eingesetzt. Solche Polymerisate sind die Homo, Co- und Terpolymerisate von von monoethylenisch ungesättigten Monomeren mit Säuregruppen, die zumindest teilweise als Salze vorliegen, oder deren Ester mit Di-C₁-C₂-alkylamino-C₂-C₆-alkylalkoholen oder deren Amide mit Di-C₁-C₂-alkylamino-C₂-C₆-alkylaminen, die in protonierter oder quaternierter Form vorliegen, wie sie beispielsweise in EP-A 113 038 und EP-A 13 416 beschrieben sind, und gegebenenfalls weiteren monoethylenisch ungesättigten Monomeren.

Als anionische Polyelektrolyte sind vorzugsweise Homo- und/oder Copolymerisate von monoethylenischen ungesättigten Carbonsäuren und Sulfonsäuren, wie Acrylsäure, Methacrylsäure, Maleinsäure, Itaconsäure, Crotonsäure und/oder deren Alkali-, vorzugsweise Natrium-, Kalium- oder Ammoniumsalze, Vinylsulfonsäure, Acrylamido- und Methacrylamidoalkylsulfonsäuren, wie 2-Acrylamido-2-methylpropansulfonsäure, 2-Sulfoethylmethacrylat und Styrolsulfonsäure und/oder deren Alkali-, vorzugsweise Natrium- oder Kalium- oder Ammoniumsalze geeignet, weiterhin Vinylphosphonsäure und Styrolphosphonsäure sowie deren Alkalisalze, vorzugsweise Natrium- oder Kalium- oder Ammoniumsalze.

Vorzugsweise werden kationisch wirksame Flockungshilfsmittel, z. B. Homo- und/oder Copolymerisate und/oder Terpolymerisate aus wasserlöslichen, monoethylenisch ungesättigten Vinylverbindungen, wie Acrylsäure- und Methacrylsäureester von Dialkylaminoalkylalkoholen in protonierter oder quatemierter Form, wie beispielsweise Dimethylaminoethylacrylat, Acrylsäure- und Methacrylsäureamide von Dialkylaminoalkylaminen, in protonierter oder quatemierter Form, wie Acrylamidopropyltrimethylamoniumchlorid und/oder Acrylamidopropyltrimethylamonium-methyl-methosulfat, vorzugsweise mit Acrylamid eingesetzt. Erfindungsgemäß verwendbare Copolymerisate werden weiterhin in EP-B-228 637 beschrieben

Die Copolymerisate können aus den genannten ionischen Monomeren und nicht-ionogenen, wasserlöslichen, monoethylenisch ungesättigten Monomeren, wie Acrylamid, Methacrylamid, N-C₁-C₂ alkylierte (Meth)acrylamide sowie mit N-Vinylamid, Vinylformamid, N-Vinylacetamid, N-Vinyl-N-methylacetamid, N-Vinylpyrrolidon gebildet werden. Geeignete wasserlösliche Monomere sind außerdem N-Methylolacrylamid, N-Methylol-methacrylamid sowie die mit einwertigen C₁- bis C₄-Alkoholen partiell oder vollständig veretherten N-Methylol(meth)acrylamide und Diallyldimethylammoniumchlorid.

Ebenso können die Copolymerisate in begrenztem Maße in Wasser schwer lösliche und/oder wasserunlösliche, ethylenisch ungesättigte Monomere, wie (Meth)acrylsäurealkylester und Vinylacetat enthalten, soweit die Löslichkeit oder Quellbarkeit der Copolymerisate in Wasser erhalten bleibt.

Die Polymerisate können darüber hinaus unter Einsatz von vernetzenden, mindestens zweifach reaktionsfähigen Monomeren, vorzugsweise zweifach ethylenisch ungesättigten Monomeren hergestellt werden, so daß sie in Wasser quellbar oder nur begrenzt löslich sind, oder aus wasserlöslichen und wasserquellbaren Polymerisaten bestehen.

Weiterhin können erfindungsgemäß wasserlösliche oder wasserquellbare, aus kationischen und anionischen Monomeren und gegebenenfalls nichtionogenen Monomeren gebildete, amphiphile Copolymerisate verwendet werden.

Die Auswahl der Flockungshilfsmittel erfolgt durch Flockungs- und Entwässerungsversuche mit Klärschlämmen im Labor- und Technikumsmaßstab. Die Mittel werden in Form ihrer 0,05 - 0,5 %igen wäßrigen Gebrauchslösung verwendet.

Mit dem erfindungsgemäßen Verfahren werden insgesamt Schlammentwässerungsleistungen von 0,1 - 0,175 m³ Schlamm pro m² Filterfläche und Stunde bzw. von über 6 m³, vorzugsweise von 6 - 12 m³ Schlamm pro m² Filtervolumen und Stunde erzielt.

Weiter ist der Ablauf des erfindungsgemäßen Verfahrens durch den Vorteil kurzer Chargenzeiten gekennzeichnet. Einer kurzen Zeit der Füllphase der Filterpresse folgt eine im Vergleich zu herkömmlichen Verfahren zeitlich stark verkürzte Druckfiltrationsphase, deren Zeitraum auf 50 - 20 %, vorzugsweise 35 - 25 %, bezogen auf die bisherige Druckfiltrationszeit, bei jeweils vergleichbaren Werten des Trockenfeststoffgehaltes im Filterkuchen, reduziert wird, die bei ausschließlicher Verwendung von organischen polymeren Flockungshilfsmitteln beim erfindungsgemäßen Verfahren im Bereich von 30 - 42 Gew.% liegen.

Das erfindungsgemäße Verfahren wird vorzugsweise mit Kammerfilterpressen oder mit Membranfilterpressen durchgeführt, wobei mit Membranfilterpressen die weiteren Vorteile, insbesondere eine zusätzlich verkürzte Chargenzeit sowie ein zusätzlich ein erhöhter Trockenfeststoffgehalt erreicht werden. Die Größe der beim erfindungsgemäßen Verfahren eingesetzten Filterplatten liegt, bezogen auf die Filterfläche pro Plattenspiegel, bei wenigstens 1 m², vorzugsweise 1 - 6 m² und besonders bevorzugt bei 1 - 4 m², entsprechend beispielsweise den Abmessungen der Filterplatten von 1,0 x 1,0 m bis 2,0 x 2,0 m.

Das erfindungsgemäße Entwässerungsverfahren ist weiterhin dadurch gekennzeichnet, daß der Klärschlamm durch die Konditionierung geflockt und unter hydrostatischer Filtration in der Weise teilentwässert wird, daß die derzeit weitgehend geregelte Beschickung des Plattenfilters mit Schlamm eingeschränkt werden oder gegebenenfalls wegfallen kann, da der wesentliche Teil der Schlammengen während der hydrostatischen Filtration in die Filterkammern eingebracht wird.

Die Erfindung wird durch die nachfolgenden Beispiele weiter erläutert.

### Vergleichsbeispiel 1

Die Entwässerung von kommunalem Faulschlamm mit einem Feststoffgehalt (Trockensubstanz) von ca. 4 Gew.% erfolgt auf einer Kammerfilterpresse der Fa. Rittershaus & Blecher, Typ AEHIS, Baujahr 1979, die folgende Kenndaten aufweist:

| | |
|---|---|
| Plattengröße | 1,2 x 1,2 m |
| Plattenwerkstoff | GGG (Grauguß) |
| Kammerzahl | 115 |
| Filterfläche | 250 m² |
| Gesamtpressenvolumen | ca. 3,5 m³ |

Die Schlammkonditionierung und Beschickung der Kammerfilterpresse erfolgte mit dem rechnergesteuerten Floctronic®-System der Fa. Stockhausen GmbH & Co. KG. Hierbei wurde der Faulschlamm nach Durchflußmengenmeßung mit der Beschickungspumpe, durch den Druckwertmeßgeber gesteuert, in die Filterpresse gepumpt. Die Zugabe des kationischen Flockungshilfsmittels Praestol® 853 BC erfolgte als 0,1 Gew.%ige wässrige Gebrauchslösung druckseitig, wie auch die nachfolgende Mischenergieregelung durch die Flocksonde reguliert. Die Filterpresse wurde zu Beginn mit einer Anfangsbeschickungsleistung von 50 m³ Schlamm pro Stunde, entsprechend 0,2 m³ Schlamm pro m² Filterfläche und Stunde gefüllt. Bei stetigem Druckanstieg auf einen Maximalwert von 15 bar wurde die Beschickungsleistung rechnergesteuert bis auf einen Wert von 10m³ Schlamm pro Stunde geregelt bei dem nach 88 Minuten Filtrationszeit die Filtration beendet wurde. Davon wurde für die Druckfiltration ab einem Druck von 1 bar eine Zeit von 75 Minuten benötigt. Insgesamt wurden 28 m³ Schlamm mit 4,5 kg Praestol® 853 BC behandelt und in die Kammerfilterpresse befördert. Die Schlammentwässerungsleistung liegt bei 4,2 m³ Schlamm pro m³ Filtervolumen und Stunde bzw. 0,06 m³ Schlamm pro m² Filterfläche und Stunde. Nach dem Öffnen der Presse wurde der Schlamm (Filterkuchen) mit einem Feststoffgehalt von 32,6 Gew.% erhalten.

### Beispiel 1

Die Entwässerung von kommunalem Faulschlamm mit einem Feststoffgehalt von ca. 4 Gew.% erfolgte auf einer Kammerfilterpresse der Fa. Rittershaus & Blecher, Typ AEHIS, mit den im Vergleichsbeispiel 1 genannten Kenndaten. Die Kammerfilterpresse wurde mit einem offenen Filtratablaufsystem versehen. Hierzu wurden im Bereich des durch die Filterplatten ausgebildeten, unteren Filtratablaufs die seitlich wechselnd im Rahmen der Filterplatte jeweils mit einem Blindstopfen versehenen Bohrungen zum geschlossenen Filtratablauf geöffnet und auf eine Nennweite von DN25 (25 mm) erweitert. Weiterhin wurden die Öffnungen jeweils mit ca. 30 cm langen Ablaufrohren versehen.

Die Schlammkonditionierung und Beschickung der Filterpressen mit Faulschlamm erfolgte mit den im Vergleichsbeispiel 1 genannten Aggregaten unter Verwendung des Floctronic®-Systems. Als Flockungshilfsmittel wurde Praestol® 853 BC in Form der 0,1 Gew.%igen, wässrigen Gebrauchslösung zur Konditionierung eingesetzt. Der geflockte, konditionierte Faulschlamm wurde mit einer Anfangsbeschickungsleistung von 120 m³ Schlamm pro Stunde, entsprechend 0,48 m³ Schlamm pro m² Filterfläche und Stunde in die Filterpresse eingebracht. Unter hydrostatischer Filtration wurde die Hauptmenge von 72 Gew.-% des feststofffreien Wassers, bezogen auf die gesamte Wassermenge des behandelten, geflockten Klärschlamms, aus der Schlammischung abgetrennt, die durch die offenen Filtratabläufe des Systems abgeführt wurde. Gleichzeitig wurde die Filterpresse fortlaufend weiter mit konditioniertem Schlamm gefüllt. Nach dem vollständigen Füllen der Kammern mit teilentwässertem Schlamm erfolgte durch die geregelte und zunehmend reduzierte Schlammbeschickung, die zuletzt 10 m³ Schlamm pro Stunde betrug, ein Druckanstieg in der Filterpresse bis auf einem maximalen Wert von 15 bar. Nach einer Druckfiltrationszeit von 24 Minuten und einer Filtrationszeit von insgesamt 34 Minuten wurden insgesamt 30 m³ Faulschlamm mit 4,3 kg Praestol® 853 BC konditioniert und in der Kammerfilterpresse entwässert. Die Schlammentwässerungsleistung liegt bei 10,3 m³ Schlamm pro m³ Filtervolumen und Stunde bzw. 0,144 m³ Schlamm pro m² Filterfläche und Stunde. Nach dem Öffnen der Filterpresse wurde der Schlamm (Filterkuchen) mit einem Feststoffgehalt von 34,2 Gew.% Trockensubstanz erhalten.

Der erfindungsgemäße Filtrationsvorgang ist durch eine wesentlich verkürzte Chargenzeit, insbesondere durch eine kurze Druckfiltrationsphase gekennzeichnet.

### Beispiel 2

Die Entwässerung eines kommunalen Faulschlamms mit einem Feststoffgehalt von ca. 4,6 Gew.% erfolgte auf einer Kammerfilterpresse der Fa. Ritterhaus & Blecher, Typ AEHIS mit den in Beispiel 1 beschriebenen Änderungen. Zusätzlich zum offenen seitlichen Filtratablaufsystem wurde das Ablaufsystem über dem Filtratkanal in den Platten mit je einem Filtratablaufmit einem Durchmesser von DN 80 (80 mm) geöffnet und außerhalb der Kammerfilterpresse mit dem Filtratablaufrohrsystem mit einem Durchmesser von DN300 (300 mm) verbunden.

Die Schlammkonditionierung und Beschickung erfolgte wie in Beispiel 1 angegeben, wobei der geflockte Schlamm mit einer Anfangsbeschickungsleistung von 120m³ pro Stunde in die Kammerfilterpresse eingebracht wurde. Nach einer Druckfiltrationszeit von 21 Minunten und einer Filtrationszeit von insgesamt 31 Minuten wurden insgesamt 30 m³ Faulschlamm mit 4,3 kg Praestol® 853 BC konditioniert und in der Kammerfilterpresse entwässert.

## Patentansprüche

1. Verfahren zur Entwässerung von mit mindestens einem organischen polymeren Flokkungshilfsmittel sowie gegebenenfalls weiteren Hilfsmitteln behandeltem geflocktem Klärschlamm mit einem Plattenfilter, **dadurch gekennzeichnet, daß** der geflockte Klärschlamm in den Plattenfilter eingebracht wird, im Plattenfilter durch eine hydrostatische Filtration die Hauptmenge des Wassers des behandelten, geflockten Klärschlamms abgetrennt und danach der teilentwässerte Klärschlamm der Druckfiltration unterworfen wird.

2. Verfahren nach Anspruch 1, **dadurch gekennzeichnet, daß** mindestens 50 Gew.-%, vorzugsweise mindestens 60 Gew.-% und insbesondere mindestens 70 Gew.-% des Wassers des behandelten, geflockten Klärschlamms durch hydrostatische Filtration abgetrennt wird.

3. Verfahren nach einem der Ansprüche 1 bis 2, **dadurch gekennzeichnet, daß** der geflockte Klärschlamm mit einer Anfangsbeschickungsleistung von mindestens 0,3 m³ Schlamm pro m² Filterfläche und Stunde in den Plattenfilter eingebracht wird.

4. Verfahren nach einem der Ansprüche 1 bis 3, **dadurch gekennzeichnet, daß** der Plattenfilter mit einem Filtratablaufsystem versehen ist, das den Filtratabfluß mit einer Strömungsgeschwindigkeit von maximal 1,0 m/sec. gestattet.

5. Verfahren nach einem der Ansprüche 1 bis 4, **dadurch gekennzeichnet, daß** das Filtratablaufsystem des Plattenfilters geschlossen ist.

6. Verfahren nach einem der Ansprüche 1 bis 4, **dadurch gekennzeichnet, daß** das Filtrat durch ein offenes Filtratablaufsystem aus dem Plattenfilter abgeführt wird.

7. Verfahren nach Anspruch 6, **dadurch gekennzeichnet, daß** das offene Filtratablaufsystem aus seitlichen Einzelabläufen aus den einzelnen Platten und/oder aus mindestens einem Sammelkanal besteht.

8. Verfahren nach einem der Ansprüche 1 bis 7, **dadurch gekennzeichnet, daß** der Plattenfilter eine Kammerfilterpresse ist.

9. Verfahren nach einem der Ansprüche 1 bis 7, **dadurch gekennzeichnet, daß** der Plattenfilter eine Membranfilterpresse ist.

10. Verfahren nach einem der Ansprüche 1 bis 9, **dadurch gekennzeichnet, daß** während der Druckfiltration die Beschickungsleistung des Plattenfilters weniger als 0,3 m³ pro Schlamm pro m² Filterfläche und Stunde beträgt, wobei der Maximaldruck im Bereich von 10 bis 20 bar liegt.

11. Verfahren nach einem der Ansprüche 1 bis 10, **dadurch gekennzeichnet, daß** die Filterplatten des Plattenfilters eine Fläche von wenigstens 1 m² aufweisen.

12. Verfahren nach einem der Ansprüche 1 bis 11, **dadurch gekennzeichnet, daß** kommunale und/oder industrielle Schlämme mit Feststoffgehalten im Bereich von 0,5 bis 15 Gew.-% eingesetzt werden.

## Claims

1. A process for dewatering a f locculated sewage sludge on a plate filter, which sewage sludge has been treated with at least one organic flocculation aid and optionally other auxiliary agents, **characterized in that** the flocculated sewage sludge is introduced into the plate filter, the major amount of water of the treated, flocculated sewage sludge is removed in the plate filter by means of hydrostatic filtration, and the partially dewatered sewage sludge subsequently is subjected to pressure filtration.

2. The process according to claim 1, **characterized in that** at least 50 wt.-%, preferably at least 60 wt.-%, and more preferably at least 70 wt.-% of the water of the treated, flocculated sewage sludge is removed by hydrostatic filtration.

3. The process according to any of claims 1 to 2, **characterized in that** the flocculated sewage sludge is introduced into the plate filter at an initial feed capacity of at least 0.3 m³ sludge per m² filter area and hour.

4. The process according to any of claims 1 to 3, **characterized in that** the plate filter is provided with a f iltrate outlet system permitting filtrate discharge at a flow rate of 1.0 m/s at maximum.

5. The process according to any of claims 1 to 4, **characterized in that** the filtrate outlet system of the plate filter is closed.

6. The process according to any of claims 1 to 4, **characterized in that** the filtrate is discharged from the plate filter through an open filtrate outlet system.

7. The process according to claim 6, **characterized in that** the open filtrate outlet system is comprised of lateral single outlets from the individual plates and/or at least one collecting channel.

8. The process according to any of claims 1 to 7, **characterized in that** the plate filter is a chamber filter press.

9. The process according to any of claims 1 to 7, **characterized in that** the plate filter is a membrane filter press.

10. The process according to any of claims 1 to 9, **characterized in that** the feed capacity of the plate filter during pressure filtration is less than 0.3 m³ sludge per m² filter area and hour, the maximum pressure ranging from 10 to 20 bars.

11. The process according to any of claims 1 to 10, **characterized in that** the filter plates of the plate filter have an area of at least 1 m².

12. The process according to any of claims 1 to 11, **characterized in that** municipal and/or industrial sludges having solids levels ranging from 0.5 to 15 wt.-% are employed.

## Revendications

1. Procédé d'assèchement de boues résiduaires floculées au moyen d'au moins un adjuvant de floculation polymère organique et éventuellement d'autres adjuvants, au moyen d'un filtre-presse, **caractérisé en ce que** la boue résiduaire floculée est introduite dans le filtre-presse, que la majeure partie de l'eau contenue dans la boue résiduaire traitée et floculée est éliminée dans la filtre-presse par filtration hydrostatique et que la boue résiduaire partiellement asséchée est ensuite soumise à la filtration sous pression.

2. Procédé selon la revendication 1, **caractérisé en ce qu'**au moins 50% en poids, de préférence au moins 60% en poids et avantageusement au moins 70% en poids de l'eau contenue dans la boue résiduaire traitée et floculée est éliminée par filtration hydrostatique.

3. Procédé selon l'une des revendications 1 ou 2, **caractérisé en ce que** la boue résiduaire floculée est introduite dans le filtre-presse avec un débit de chargement d'au moins 0,3 m³ de boue par m² de surface filtrante et par heure.

4. Procédé selon l'une des revendications 1 à 3, **caractérisé en ce que** le filtre-presse est équipé d'un système d'évacuation de filtrat, qui permet l'évacuation du filtrat à une vitesse d'écoulement d'un maximum de 1,0 m/s.

5. Procédé selon l'une des revendications 1 à 4, **caractérisé en ce que** le système d'évacuation du filtrat hors du filtre-presse est fermé.

6. Procédé selon l'une des revendications 1 à 4, **caractérisé en ce que** le filtrat est évacué du filtre-presse via un système ouvert d'évacuation du filtrat.

7. Procédé selon la revendication 6, **caractérisé en ce que** le système ouvert d'évacuation de filtrat est constitué d'évacuations latérales partant des plaques individuelles et/ou d'au moins un canal collecteur.

8. Procédé selon l'une des revendications 1 à 7, **caractérisé en ce que** le filtre-presse est un filtre-presse à chambres.

9. Procédé selon l'une des revendications 1 à 7, **caractérisé en ce que** le filtre-presse est un filtre-presse à membranes.

10. Procédé selon l'une des revendications 1 à 9, **caractérisé en ce que**, pendant la filtration sous pression, le débit de chargement du filtre-presse est inférieur à 0,3 m³ de boue par m² de surface filtrante et par heure, la pression maximale étant de l'ordre de 10 à 20 bar.

11. Procédé selon l'une des revendications 1 à 10, **caractérisé en ce que** les plaques filtrantes du filtre-presse présentent une surface d'au moins 1 m².

12. Procédé selon l'une des revendications 1 à 11, **caractérisé en ce que** l'on met en oeuvre des boues résiduaires communales et/ou industrielles présentant des teneurs en solides de l'ordre de 0,5 à 15% en poids.
